Europäisches Patentamt

European Patent Office

Office européen des brevets

(11) Publication number: **0 045 724**
**B1**

# EUROPEAN PATENT SPECIFICATION

(45) Date of publication of patent specification: **12.09.84**

(21) Application number: **81830131.9**

(22) Date of filing: **27.07.81**

(51) Int. Cl.³: **F 16 L 37/12,** E 21 B 17/04,
F 16 L 25/00, F 16 B 21/16

(54) Joint with clamping strip.

(30) Priority: **31.07.80 IT 8341880**

(43) Date of publication of application:
**10.02.82 Bulletin 82/06**

(45) Publication of the grant of the patent:
**12.09.84 Bulletin 84/37**

(84) Designated Contracting States:
**BE CH DE FR GB LI**

(56) References cited:
**US-A-2 901 269**

(73) Proprietor: **CASAGRANDE SpA
Via Grigoletti 107
I-33074 Fontanafredda (PN) (IT)**

(72) Inventor: **Casagrande, Bruno
Via Malignani, 3
I-33074 Fontanafredda (PN) (IT)**

(74) Representative: **Petraz, Gilberto Luigi
G.L.P. S.a.s. di Gilberto Petraz P.le Cavedalis 6/2
I-33100 Udine (IT)**

Courier Press, Leamington Spa, England.

## Description

This invention concerns a joint with a clamping annular strip suitable for locking tubular structures together axially and torsionally.

Said tubular structures can advantageously be hollow cylinders, parts constituting sleeves or other like or similar elements such as, for instance, piling tubes for foundations, tubes to obtain sample cores, etc. whereby a hydraulic seal is required in the joint and an external surface substantially void of projections and protrusions.

In particular the invention refers to a joint with clamping strip suitable for use in locking tubular structures together axially and torsionally and for being employed often in coupling together and uncoupling axially parts of said tubular structures, for example, when foundation holes have to be excavated or sample cores of the terrain or other substances have to be taken.

The prior art, teaches a variety of pipe connectors mostly based on the use of a split latch ring whose ends are circumferentially displaceable relative to each other to cause the contraction or expansion of said split ring within a circumferential chamber formed by two aligned circumferential grooves cut in the internal wall of the outer pipe and in the external wall of the inner pipe respectively.

The prior art references nevertheless teach a variety of means for carrying out the relative displacement of the split ring's ends.

Thus GB—A—730.339 teaches that the split ring whose ends are normally apart is contracted by means of a series of locking screws mounted in radially extending threaded holes in the wall of the external of a socket pipe for engaging the split ring at intervals around its periphery and forcing it out for the groove in the outer pipe and into the groove of the inner pipe to lock the two pipes together.

A split ring pipe joint with similar locking screws is proposed in GB—A—1,107,273 with the addition of a gasket plastically deformed in the circumferential chamber by the pressure of the split ring and a series of windows formed in the wall of the external pipe in the spaces intervening with the locking screw locations through which the conditions of the split ring may be observed and manipulated during its insertion or removal.

An analogous joint is provided in GB—A—1,487,948 in which the locking screw means include a first part threadedly engaged in a radial bore in the outer pipe and a second part is fixed relative to the split ring whereby the first and the second parts are coupled by a lost motion coupling.

This arrangement is obviously intended to keep the split ring always coupled to the outer pipe.

US—A—3,606,393 provides a similar pipe connector wherein the lock screws are housed in boxes projecting outwardly from the external wall of the outer pipe, the split ring being centralized by spring-loaded centralizer pins arranged circumferentially.

The above described joints involve various drawbacks. One drawback lies in the fact that said known joints require particularly long setting-up time and fairly burdensome setting-up operations in addition to the presence of cumbersome external projections that could be dangerous at the work sites and troublesome during storing and transport of the pipes. Other known types of.joints are known which employ split ring locking means based on the quick-release or quick-lock principle.

One such joint is proposed by GB—A—1,113,694 in which the split ring ends which are apart in the inoperative position and drawn together by some means such as radial screws and held in the operative position by a U-shaped clip.

In this type of joints the drawing together of the ends of the split ring is obviously a tedious operation and was thus simplified by the joints described in FR—A—1,540,280 and US—A—3,204,991 in which the ends of the split ring are brought together by an externally actuated cylindrical cam means in constant engagement with said ends arranged externally to the external pipe and projecting away therefrom.

The fact that these actuating means project outward and the particular construction thereof makes the use of the joints employing them unsuitable for certain tasks such in piles and oil well lining where the jointed pipes are forced into the ground.

Besides, these joints are prone to accidental release. GB—A—1,174,738 proposes a split ring pipe joint in which an expanded contractible split ring is employed to form the latch.

In this patent a special tool is needed to expand the split ring and a disposable lock means are required to be removably arranged between the ends of said latch ring when the pipes are locked together.

These lock means can only be used once.

FR—A—1,466,116 describes a split ring joint whereby the ends of the ring are moved relative to each other by an external tool basically similar to that described in GB—A—1,174,738 with the difference that this tool is permanently anchored to the outside of the outer pipe.

US—A—2,901,269 proposes a split ring joint with lock means in the form of an annular plug arranged between the ends of the split which, upon rotation, is capable of separating the ends thus expanding the contractible split ring into an inoperative position.

The plug means must be retained by a suitable cover plate to hold it in its own housing.

US—A—2,877,732 proposes a joint of the split ring type for connecting torpedo sections in which the ends of the split ring are brought together and separated by a turnbuckle having a right and left hand threaded portions threadedly engaging corresponding threaded apertures in the ends of the ring, the central part of the turnbuckle being non circular in cross section for receiving a wrench which may be inserted and turned within an access window normally closed by a suitable plug.

This joint requires a fairly large housing space for the turnbuckle that must also be sufficient to receive the head of the wrench that has to turn therein.

The invention therefore has the purpose of obtaining an improved split ring joint which overcomes the aforesaid drawbacks and at the same time provides an internal coupling which can be made quickly and gives a safe hydraulic seal and balanced connection between the components of the tubular structure.

One purpose of the invention, therefore, is to obtain a joint which enables a quick axial and torsional coupling to be made between hollow cylindrical structures.

Another purpose is to obtain an annular strip joint with simple and reliable means for expanding and contracting said strip wherein said means can be actuated externally and occupy a relatively small housing that need not be externally sealed. Lastly, it is a purpose of the invention to realize a joint connected structurally in such a way that, to carry out a coupling, no other auxiliary parts are needed which are not already present in the joint itself.

The invention, therefore, comprises a joint for tubular structures such as, for instance, joints for piping for lining purposes, wherein the end part of one structure is circumferentially superimposed on the end part of the other structure and there is at least one circumferential chamber formed by grooves cut in respective superimposed parts, and whereby axial tooth elements are present on one structure and cooperate with substantially counterpart recesses in the other structures to be connected, and whereby there is also at least one possible packing to provide a hydraulic seal, and wherein in said circumferential chamber there is a split annular elastic clamping strip normally engaging the bottom of said groove present in one or the other structure in the inoperative position and engaging surfaces of both grooves when in the operative position, characterized by the fact that there is at least one eccentric cam means which displaces at least one of the elastic strip ends circumferentially relative to the other, and said eccentric cam means is rotatably arranged on at least one end of an auxiliary strip section housed within said circumferential chamber, the other end of the strip cooperating with said other end of the elastic strip, and said eccentric cam means engages a recess provided in the one end of said elastic strip.

According to a preferential embodiment of the invention an eccentric cam means is provided at each extremity of said auxiliary strip section and each eccentric cam means engages a respective recess provided at each end of said elastic strip.

According to an alternative embodiment of the invention the other end of said auxiliary strip section is integral with the other end of said elastic strip.

A detailed description of the invention is given hereinafter by way of example only with the aid of the enclosed drawings in which:

Fig. 1 shows two hollow cylindrical parts which have to be connected together;

Fig. 2 shows an orthogonal section corresponding with the joint with the clamping strip of the connected hollow cylinders of Fig. 1;

Fig. 3 shows a section of a detail of the system for tensioning the joint with the clamping strip by means of an eccentric cam according to an alternative embodiment;

Fig. 4 shows a section of a detail of the eccentric cam with the joint with a clamping strip in its inoperative position;

Fig. 5 shows a section of a detail of the locking pin system for locking the joint with a clamping strip in its inoperative position;

Fig. 6 shows a section of a detail of the eccentric with the joint with a clamping strip in its operative position;

Fig. 7 shows a section of a detail of the locking pin system for locking the joint with a clamping strip in its operative position.

Hereinafter the same parts or parts having the same functions will bear the same reference numbers.

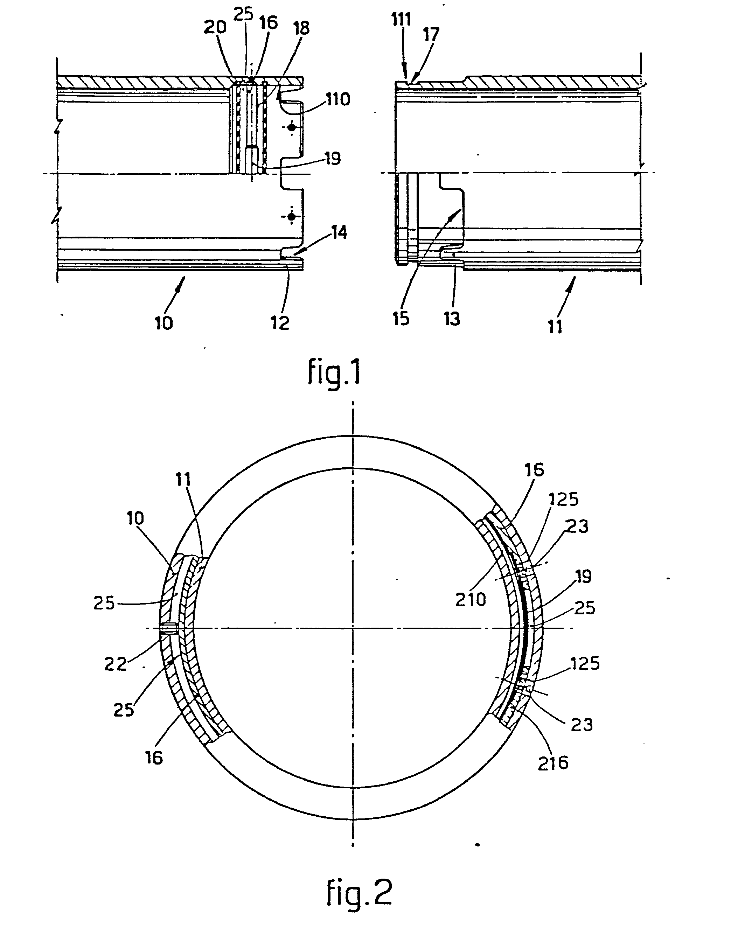

Fig. 1 shows two hollow cylindrical parts or tubular structures 10 and 11 suitable for being connected axially together and torsionally owing to the effect of the possible superimposition of the two superimposable end zones 110—111.

Each cylindrical part or tubular structure 10—11 bears circumferentially, on the superimposable end parts 110—111 able to be coupled together, axial tooth elements 12—13 respectively which cooperate with the substantially counterpart spaces 15—14 respectively present on the other superimposable end part 111—110.

The axial connection between said end parts 110—111 is secured with an elastic strip 16 which during the open-joint phase permits one part, part III for instance, to be inserted within the end part 110.

Eccentric cam means 23, which in our example consist of an eccentric cam cooperating with said elastic strip 16, are in this case rotatingly arranged on an auxiliary strip section 19 housed within a circumferential chamber 25 formed by grooves 17 and 18 respectively machined in the outer surface of tubular structure 11 and inner surface of outer tubular structure 10, said circumferential chamber 25 also houses the elastic strip 16.

According to a preferential embodiment of the invention, said auxiliary strip section 19 consists of an arc section, having a smaller thickness than that of the elastic strip 16, snugly fitted into the circumferential chamber 25, although it may also be fixed therein.

The eccentric cam means 23 which each consists of an eccentric cam 27 are provided rotatingly at each extremity of said auxiliary strip section 19 in such a way as to project radially outwards therefrom.

Said eccentric cam cooperates with a corresponding recess means 123 curved out at each end 116—216 of the elastic strip 16 which recess means consists of a semi-circular cut-out whose internal surface is engageable by the respective eccentric cam.

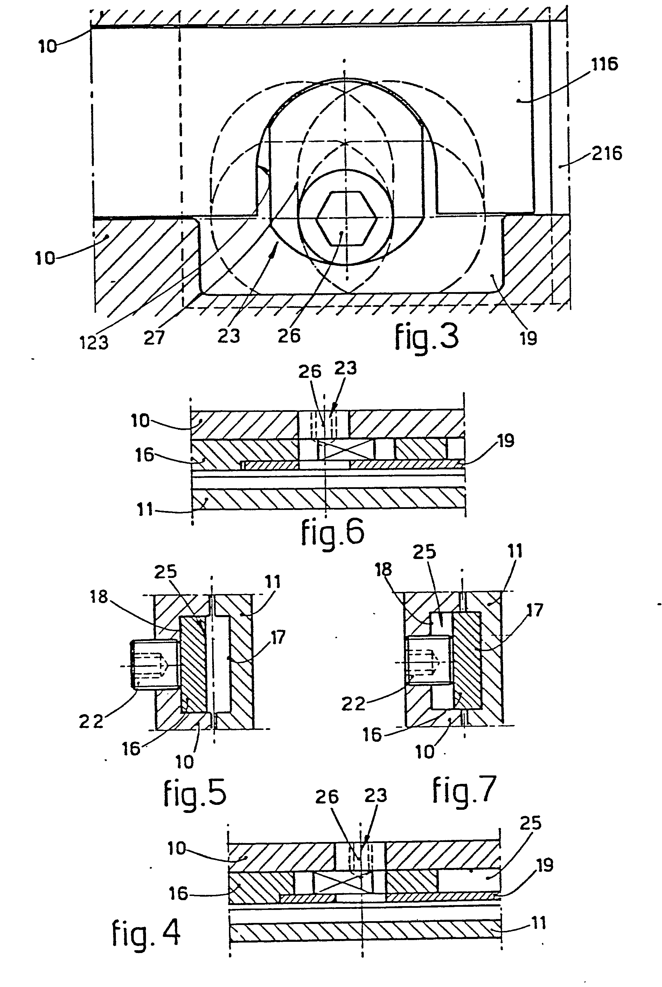

Figure 3 shows an alternative embodiment of the invention in which said auxiliary strip section 19 is snugly housed in said circumferential chamber 25 and is integral to end 216 of said elastic strip 16 while the first end of said auxiliary strip section 19 is provided with said eccentric cam means 23 which cooperates in a corresponding recess 123 formed at end 116 of said elastic strip 16.

In actual fact the rotation of said eccentric cam 27 by a desired amount enables the diameter of the elastic strip 16 to be varied.

Said eccentric cams 27 are contained together with the auxiliary strip 19 in an appropriate seating inside the circumferential chamber 25.

Said eccentric cam means 23 are accessible from outside through a corresponding window 125 provided in the outer surface of the outer tubular structure 10.

This ability to be accessible is favourable for permitting their rotation by suitable control means; for instance through suitable socket keys 26 with the aid of a socket spanner can be visualized.

If the eccentric cams are rotated outwards, then the elastic strip 16 is fully lodged in the appropriate guide or hollow 18.

This enables the cylindrical part 11 to be inserted and to slide until its teeth 13 and spaces 15 are fully gripped and engaged with the opposed counterpart spaces 14 and opposed counterpart teeth 12 of the cylindrical part 10.

When the two tubular structures 10 and 11 have been fitted together in a coordinated manner, the groove 17 having an annular shape and being machined on the outside of the cylindrical part 11 is face to face with the aforesaid inner groove 18 which contains the elastic strip 16.

As mentioned before the two facing grooves 17 and 18 make one single and circumferential chamber 25 able to permit movements of expansion or contraction the elastic strip 16 radially and at least partially.

The depth of the grooves 17 and 18 will be such that during the closure phase the elastic strip 16 has to be contained in the respective groove, for instance 18, whereas during the clamping phase said strip will protrude from the clamping groove, for instance from 17.

Safety means, which may consist of one or more locking pins 22, enable the elastic strip 16 to be clamped within the circumferential chamber 25.

One or more annular sealing packings 20, inserted into suitable seatings, are placed between the two cylindrical parts 10 and 11 so as to create a hermetic seal in the connection made between said parts 10 and 11.

Fig. 3 shows a section of a particular lay-out of a system for tensioning the joint with strip 16 according to the alternative embodiment.

The eccentric cam 27, the position of which in our example can be regulated from the outside by means of suitable adjusting means, for instance with a socket spanner acting in the appropriate socket 26 as said before, can be rotated in two opposite directions, thus taking up the two positions shown with dashes in Fig. 3 and substantially lying at 180° to each other in the example shown.

When rotated towards the left, which in the example shown corresponds with the inoperative position of the joint, the eccentric cam means 23 pushes the elastic strip 16 into the annular groove 18 with its cam 27.

In the preferential embodiment said elastic strip 16 enters wholly into said groove 18 only if, as in the example shown, the other eccentric cam has also been rotated into a position which is the counterpart of the first cam. Conversely the eccentric cam, when rotated into the opposite position, which corresponds with the operative position of the joint, stretches the elastic strip 16 inside the possibly circumferential chamber 25 and makes it engage at least partially with the surfaces of the annular groove 17 and to part of the surfaces of the annular groove 18, thus clamping the two connected tubular structures 10—11 together axially.

This clamping position is the same for both the preferential and alternative embodiments.

Figs. 4 and 5 respectively show a section of a detail of the position of the eccentric cam or cams with the elastic strip 16 in the inoperative joint position and a section of a detail of the clamping with the pin 22, here too the elastic strip 16 being in the inoperative joint position.

Fig. 5 shows the locking pin partially withdrawn from the annular chamber 25 so as to enable the elastic strip 16 to enter wholly within the groove 18 in order possibly to be able to separate the two cylindrical parts 10 and 11.

Fig. 6 shows a section of a detail of the position of the eccentric with the elastic strip 16 in the operative joint position; in this position the eccentric cam 27 is rotated by 180° as compared to its position in the unactivated joint (Fig. 4).

Fig. 7 shows a section of a detail of the locking pin 22 inserted into the possibly circumferential chamber 25 so as to secure the elastic strip 16 in the operative joint position. In this position the elastic strip 16 engages at least partially with the inner surfaces of the annular groove 17 and part of the surfaces of the annular groove 18.

Furthermore, Figs. 5 and 7 together show the radial sliding of the elastic strip 16 inside the chamber 25 so as to lie respectively in one or the other of the two positions with the joint inoperative or operative.

In essence, to connect two tubular parts 10 and 11 axially by means of the joint with the strip, it is enough to introduce one part within the other axially and merely to act on the lengthwise activation means, which in our instance are represented in the form of an example by the eccentric cam means 23, in such a way as to stretch or thrust the elastic strip 16 inside the circumferential chamber 25 and thus to clamp the two parts 10 and 11 axially.

Safety means in the specific example shown as locking pins 22, enable the axial fixture of the tubular parts 10 and 11 to be further ensured.

## Claims

1. A joint for tubular structures (10, 11) wherein the end part of one structure (10) is circumferentially superimposed on the end part of the other structure (11) and there is at least one circumferential chamber (25) formed by grooves (17—18) cut in respective superimposed parts (111—110), and whereby axial tooth elements (12) are present on one structure (10) and cooperate with substantially counterpart recesses (15) in the other structure (11) to be connected, and wherein there is also at least one packing (20) to provide a hydraulic seal; and wherein in said circumferential chamber (25) there is a split annular elastic clamping strip (16) normally engaging the bottom of said groove present in one or the other structure (10—11) in the inoperative position and engaging surfaces of both grooves when in the operative position, characterized by the fact that there is at least one eccentric cam means (23) which displaces at least one of the elastic strip ends (116—216) circumferentially relative to the other, and said eccentric cam means (23) is rotatably arranged on at least one end of an auxiliary strip section (19) housed within said circumferential chamber (25), the other end of the strip (19) cooperating with said other end of the elastic strip (16), and said eccentric cam means (23) engages a recess (123) provided in the one end of said elastic strip (16).

2. A joint as in Claim 1, characterized by the fact that said eccentric cam means (23) are provided at each end of said auxiliary strip section (19) and said eccentric cam means (23) engage a corresponding recess (123) provided at each end (116—216) of said elastic strip (16).

3. A joint as in Claim 1 or 2, characterized by the fact that said auxiliary strip section (19) consists of an arc section whose thickness is less than the thickness of said elastic strip (16).

4. A joint as in Claim 1, characterized by the fact that the other end of said auxiliary strip section (19) is integral to the other end (216) of said elastic strip (16).

5. A joint as in Claim 1 or any of the preceding claims characterized by the fact that said eccentric cam means (23) consist of an eccentric cam (27) rotatably arranged on the respective end of said auxiliary strip section (19) and that said eccentric cam (27) is externally provided with a socket key (26) coaxial to the cam rotational axis accessible from outside through a window (125) arranged in the outer surface of the outer tubular structure (10).

6. A joint as in Claim 1 or any preceding claims characterized by the fact that said recess (123) is a semi-circular cut-out, whose internal surface is engageable by the respective eccentric cam (27).

## Revendications

1. Joint pour structures tubulaires (10, 11) dans lequel la partie terminale d'une première structure (10) est superposée circonférentiellement à la partie terminale de l'autre structure (11) et dans lequel il y a au moins une chambre circonferentielle (25) formée par des gorges (17—18) taillées dans les parties superposées respectives (111—110) et de sorte que des éléments dentés axiaux (12) sont présents sur une structure (10) et coopèrent avec des cavités sensiblement complémentaires (15) de l'autre structure (11) à raccorder, et où il y a au moins une garniture d'étanchéité (20) pour établir une joint étanche hydraulique; et où, dans ladite chambre circonférentielle (25), il y a une bande de blocage élastique annulaire fendue (16) normalement en contact avec le fond de ladite rainure présente dans l'une ou l'autre desdites structures (10—11) dans la position inactive et en contact avec les surfaces des deux gorges lorsqu'il est en position active, caractérisé par le fait qu'il y a au moins un moyen du type came excentrique (23) qui déplace au moins l'une des extrémités de la bande élastique (116—126) circonférentiellement par rapport à l'autre, et ledit moyen (23) du type came excentrique est agencé avec possibilité de rotation sur au moins une extrémité de ladite section de bande auxiliaire (19) et ledit moyen du type came excentrique coopère avec une évidement correspondant (123) prévu à chaque extrémité (116—216) de ladite bande élastique (16).

2. Joint selon la revendication 1, caractérisé par le fait que lesdits moyens du type came excentrique (23) sont prévus à chaque extrémité de ladite section de bande auxiliaire (19) et lesdits moyens du type came excentrique (23) attaquent un évidement correspondant (123) prévu à chaque extrémité (116—216) de ladite bande élastique (16).

3. Joint selon l'une des revendications 1 ou 2, caractérisé par le fait que ladite section de bande auxiliaire (19) est constituée par une section en arc dont l'épaisseur est inférieure à l'épaisseur de ladite bande élastique (16).

4. Joint selon la revendication 1, caractérisé par le fait que l'autre extrémité de ladite section de bande auxiliaire (19) fait corps avec l'autre extrémité (216) de ladite bande élastique (16).

5. Joint selon la revendication 1 ou l'une quelconque des revendications précédentes, caractérisé, par le fait que ledit moyen (23) du type came excentrique est constitué par une came excentrique (27) montée rotative sur l'extrémité correspondante de ladite section de bande auxiliaire (19) et que ladite came excentrique (27) est munie extérieurement d'une douille (26) coaxiale à l'axe de la rotation de la came, accessible de l'extérieur à travers une fenêtre (125) ménagée dans la surface extérieure de la structure tubulaire extérieure (10).

6. Joint selon la revendication 1 ou l'une quelconque des revendications précédentes, caractérisé par le fait que ledit évidement (123) est une encoche semi-circulaire dont la surface interne peut être attaquée par la came excentrique (27) correspondante.

## Patentansprüche

1. Fuge für röhrenförmige Strukturen (10, 11), wobei sich der Endteil einer Struktur (10) auf dem Endteil der anderen Struktur (11) kreisförmig überlappt und mindestens eine kreisförmige Kammer (25) vorhanden ist, die aus Rillen (17, 18) besteht, die in entsprechenden überlappenden Teilen (111—110) geschnitten sind und wobei Achsenzahnelemente (12) auf einer Struktur (10) verhanden sind und mit wesentlich Spiegelvertiefungen (15) in der anderen zu verbindenden Struktur (11) mitwirken und wobei mindestens eine Dichtung (20) zur hydraulischen Dichtigkeit vorhanden ist und wobei in der genannten kreisförmigen Kammer (25) ein rigförmiger gespaltener Haltering (16) vorhanden ist, der normalerweise in der Außerbetriebsstellung den Boden der in einer oder in der anderen Struktur (10, 11) vorhandenen genannten Rille in Anspruch nimmt und der, wenn er sich in der Betriebsstellung befindet, Flächen beider Rillen in Anspruch nimmt, dadurch gekennzeichnet, daß mindestens ein Nockenmittel (23) vorhanden ist, das mindestens eines der Enden des Ringes (116, 216) kreisförmig gegenüber dem anderen verschiebt, und daß die genannten Nockenmittel (23) auf mindestens einem Ende eines Hilfsschnittes des Ringes (19) drehbar gelagert sind, der innerhalb der genannten kreisförmigen Kammer (25) gelagert ist, wobei das andere Ende des Ringes (19) mit dem genannten anderen Ende des Ringes (16) mitwirkt und die genannten Nockenmittel (23) eine Vertiefung (123) in Anspruch nehmen, die an einem Ende des genannten Ringes (16) vorgesehen ist.

2. Fuge nach Anspruch 1, dadurch gekennzeichnet, daß die genannten Nockenmittel (23) an jedem Ende des genannten Ringshilfsschnittes (19) vorgesehen sind und daß die genannten Nockenmittel (23) eine entsprechende Vertiefung (123) in Anspruch nehmen, die an jedem Ende (116, 216) des genannten Ringes (16) vorgesehen ist.

3. Fuge nach Anspruch 1 oder 2, dadurch gekennzeichnet, daß der genannte Ringshilfsschnitt (19) aus einem bogenförmigen Schnitt besteht, dessen Dicke kleiner als sie Dicke des genannten Ringes (16) ist.

4. Fuge nach Anspruch 1, dadurch gekennzeichnet, daß das andere Ende des genannten Ringshilfsschnittes (19) dem anderen Ende (216) des genannten Ringes (16) integral ist.

5. Fuge nach Anspruch 1 oder irgendeinem der vorhergehenden Ansprüche, dadurch gekennzeichnet, daß die genannten Nockenmittel (23) aus einem Nocken (27) bestehen, der auf dem entsprechenden Ende des genannten Ringshilfsschnittes (19) drehbar angeordnet ist und daß der genannte Nocken (27) äußerlich mit einem vieleckigen Hohlraum versehen ist, der mit der Drehachse des Nockens koaxial ist, der von außen durch ein Fenster (125) zugänglich ist, das an der Außenfläche der röhrenförmigen Außenstruktur (10) angeordnet ist.

6. Fuge nach Anspruch 1 oder irgendeinem vorhergehenden Anspruch dadurch gekennzeichnet, daß die genannte Vertiefung (123) ein halbkreisförmiger Einschnitt ist, dessen Innenfläche vom entsprechenden Nocken (27) in Anspruch genommen werden kann.

fig.1

fig.2

1

fig.3

fig.6

fig.5

fig.7

fig.4